# FASCICULE DE BREVET EUROPEEN

(11) **EP 2 390 183 B1**
(45) Date de publication et mention de la délivrance du brevet: **16.01.2013**
(21) Numéro de dépôt: 11003726.4
(22) Date de dépôt: 06.05.2011
(51) Int. Cl.: B64D 15/14, B64C 27/04

(54) **Dispositif d'alimentation électrique et de contrôle d'un équipement d'un rotor, et aéronef muni d'un tel dispositif**
Vorrichtung zur Stromversorgung und Kontrolle einer Ausrüstung eines Rotors, und mit einer solchen Vorrichtung ausgestattetes Luftfahrzeug
Device for electric supply and control of the equipment of a rotor and aircraft provided with such a device

(30) Priorité: 28.05.2010 FR 1002257
(43) Date de publication de la demande: 30.11.2011
(73) Titulaire: EUROCOPTER, 13725 Marignane Cédex (FR)
(72) Inventeur: Imbert, Nicolas, 13008 Marseille (FR); Chuc, Charles, 13012 Marseille (FR)
(74) Mandataire: Pouillot, Laurent Pierre Paul

(56) Documents cités:
- EP-A1- 1 541 467
- US-A- 5 572 178
- US-A1- 2006 226 292
- US-B2- 7 602 081

## Description

La présente invention concerne un dispositif d'alimentation électrique et de contrôle d'un équipement d'un rotor, et un aéronef muni d'un tel dispositif.

L'invention se situe donc dans le domaine technique des moyens d'alimentation électrique et de contrôle d'équipements présents sur un rotor tournant, passant d'un repère fixe à un repère tournant. Plus particulièrement, le domaine technique des moyens d'alimentation électrique et de contrôle de moyens de dégivrage et d'antigivrage d'un rotor de giravion.

On connaît un premier dispositif muni d'un générateur de courant alternatif relié à une unité électrique dénommée parfois « power deicing unit » en langue anglaise. L'unité électrique est notamment pourvue d'un redresseur électrique et d'un séquenceur pour alimenter une pluralité de câbles électriques selon une séquence prédéterminée. De plus, par mesure de sécurité, cette unité électrique est doublée.

Le générateur et l'unité électrique sont installés dans un repère fixe à savoir dans la cellule de l'aéronef.

Par suite, le premier dispositif comprend un collecteur électrique comportant une partie non tournante et une partie tournante reliée par des balais. La partie non tournante possède par exemple des pistes électriques circulaires alimentées électriquement par des câbles électriques provenant de l'unité électrique, la partie tournante ayant un balai circulant sur chaque piste électrique.

La partie non tournante alimente alors une pluralité de tapis chauffants par pale selon la séquence programmée dans l'unité électrique pour dégivrer ou empêcher la formation de givre sur la pale, chaque tapis étant relié par un câble électrique à un balai de la partie tournante du collecteur électrique.

Ce premier dispositif combinant une unité électrique et un collecteur électrique est très lourd, notamment du fait d'un nombre important de câbles électriques et de pistes électriques.

Ce premier dispositif peut alors être installé sans difficulté sur un giravion de fort tonnage fortement motorisé. Par contre, son installation sur un giravion de moyen tonnage peut conduire à la suppression de deux passagers par exemple.

En outre, les frottements de chaque balai du collecteur contre la piste électrique correspondante tendent à dégrader les performances de ce collecteur électrique. Des actions de maintenance nécessitant le démontage du dispositif doivent alors être entreprises relativement souvent. Or, le collecteur électrique étant parfois difficile d'accès, le coût de la maintenance peut être élevé et impose un temps d'immobilisation important du giravion.

Enfin, on note que l'unité électrique étant installée dans la cellule de l'aéronef, cette unité électrique est susceptible de perturber les équipements électriques environnants. De plus, l'unité électrique présente un encombrement non négligeable et de fait pénalisant.

Le document US 7602081, qui montre toutes les caractéristiques du préambule de la revendication 1, présente un deuxième dispositif muni d'une unité de contrôle disposée dans un repère fixe, cette unité de contrôle étant liée à un collecteur électrique.

Le collecteur électrique alimente alors des équipements électriques via une unité de distribution disposée dans un repère tournant.

L'unité de contrôle génère alors un courant électrique transmis à l'unité de distribution par le collecteur électrique, ce collecteur électrique jouant le rôle d'interface entre le repère tournant et le repère non tournant, l'unité de distribution convertissant le courant électrique reçu et alimentant les équipements électriques en fonction des signaux électriques lui parvenant.

Le document US 200610226292 utilise aussi un collecteur électrique à balais.

Enfin, le document US5519275 présente un transformateur électrique rotatif autorisant la transmission d'informations par le biais d'un courant porteur.

La technologie du courant porteur est intéressante. Toutefois, le débit des informations transmises et les parasites observés limitent cette technologie à des applications restreintes.

On note qu'il en va de même des collecteurs à balais. Il parait difficile de faire transiter un faible signal provenant par exemple d'un capteur de température ou de givre par un collecteur à balais ou par un courant porteur.

On note que l'état de la technique comprend le document EP 1541467 relatif à un dispositif de dégivragelantigivrage modulaire d'une surface aérodynamique, ainsi que le document US 5 572 178.

La présente invention a alors pour objet de proposer un dispositif relativement léger permettant de s'affranchir des limitations mentionnées ci-dessus, en ne perturbant pas les équipements agencés dans la cellule et ne nécessitant pas des actions de maintenance importantes.

Selon un aspect, l'invention vise à s'affranchir de l'utilisation d'un collecteur électrique pour transférer une puissance électrique vers des équipements d'un rotor et commander lesdits équipements.

Selon l'invention, un dispositif d'alimentation électrique et de contrôle d'un équipement d'un rotor est muni d'un générateur d'un courant alternatif triphasé agencé dans un repère fixe, en étant fixé à la cellule d'un giravion par exemple. On comprend que le générateur de courant peut être un alternateur utilisé à d'autres fins, l'alternateur de base d'un giravion pourvu dudit rotor par exemple. Le générateur de courant n'est donc pas nécessairement dédié uniquement audit dispositif.

Plus particulièrement, le dispositif est adapté à l'alimentation de moyen de lutte contre le givre de type moyen de dégivrage ou moyens d'antigivrage de pales de rotor d'un giravion, un rotor de sustentation ou un rotor anticouple notamment. Le dispositif permet cependant d'alimenter électriquement tout type d'équipement, des moyens lumineux par exemple.

Ce dispositif est notamment remarquable en ce qu'il comporte un transformateur à champ tournant muni d'une partie fixe reliée électriquement au générateur et d'une partie tournante reliée électriquement à un séquenceur qui est agencé dans un repère tournant, le dispositif comportant un moyen de commande du séquenceur disposé dans le repère fixe, ce moyen de commande étant relié au séquenceur par un moyen de liaison sans contact et le séquenceur étant apte à alimenter électriquement l'équipement sur ordre du moyen de commande.

Par suite, l'invention combine un transformateur, un séquenceur et un moyen de liaison sans contact. La synergie de ces composants permet de remplacer l'unité électrique et le collecteur électrique du premier dispositif par exemple.

Ainsi, ce dispositif ne prévoit pas une unité électronique de puissance disposée dans la cellule d'un giravion susceptible de perturber les équipements environnants mais un transformateur muni d'une partie fixe apte à être solidaire d'une cellule d'un giravion qui coopère avec une partie tournante apte à être solidaire d'un rotor.

Ce transformateur alimente en courant électrique un séquenceur qui répartit ledit courant vers des équipements du rotor. Le séquenceur est donc dans un repère tournant associé au rotor et non pas à l'intérieur de la cellule.

En outre, la combinaison du dispositif selon l'invention prévoit un moyen de liaison sans contact, un joint tournant optique ou par ultrasons voire un moyen de liaison par haute fréquences par exemple, pour notamment transmettre des ordres au séquenceur. La distribution de courant électrique et d'un ordre de commande par le séquenceur peut être commandée via le moyen de liaison sans contact à l'aide d'au moins un moyen de commande agencé dans le poste de pilotage par exemple.

Classiquement, le séquenceur peut posséder un processeur, ou équivalent, muni d'une logique mise en oeuvre par ce séquenceur lorsqu'il est activé par le moyen de commande.

On verra par la suite que le moyen de liaison sans contact peut permettre le transfert de tout type d'informations aussi bien de la cellule vers le rotor que du rotor vers la cellule sans dégradation des performances.

D'un point de vue maintenance, il est concevable de mettre en oeuvre des composants ne nécessitant pas des actions de maintenance complexes.

Par suite, la combinaison innovante du dispositif prévoit de multiples éléments qui fonctionnent en synergie pour fournir une alternative intéressante aux dispositifs connus.

Le dispositif peut de plus comporter une ou plusieurs des caractéristiques qui suivent.

Par exemple, la partie fixe du transformateur est entourée par la partie tournante ce qui facilite notamment l'accès à la partie tournante du transformateur pour des opérations de maintenance.

La partie fixe comprend éventuellement l'organe primaire du transformateur, l'organe secondaire du transformateur étant agencé sur la partie tournante du transformateur.

De plus, la partie fixe peut comporter trois enroulements primaires triphasés alimentés chacun par le générateur, ces trois enroulements primaires constituant l'organe primaire du transformateur. Par exemple, trois conducteurs électriques alimentent l'organe primaire du transformateur par un courant alternatif de 115 volts.

De même, la partie tournante comporte au moins trois enroulements secondaires triphasés, ces trois enroulements secondaires constituant l'organe secondaire du transformateur. Par mesure de sécurité, on peut doubler le système en prévoyant par exemple deux ensembles de trois enroulements secondaires. Un tel système est donc redondant.

Selon une variante, la partie tournante comporte au moins un convertisseur électrique de type redresseur PD3 pour délivrer un courant électrique continu au séquenceur.

On rappelle qu'un redresseur PD indice q est un montage avec source en étoile et deux commutateurs ou redresseurs "en pont" avec source étoilée, l'indice q représentant le nombre de phase. On se rapportera à la littérature pour obtenir des précisions sur un tel redresseur.

Le convertisseur électrique peut comporter des diodes, ou encore des thyristors, la commande des thyristors passant par le moyen de liaison sans contact par exemple.

La partie tournante du transformateur comportant une périphérie interne en regard de la partie non tournante et une périphérie externe, le convertisseur électrique de type redresseur PD3 peut déboucher sur la périphérie externe.

La conversion du courant alternatif vers un courant continu est donc réalisée au sein du transformateur, le convertisseur électrique étant intégré dans la partie tournante de ce transformateur.

Par exemple, trois conducteurs électriques alimentent alors l'organe primaire du transformateur par un courant alternatif de 115 volts. Deux conducteurs électriques sortent du transformateur, plus précisément du convertisseur électrique pour alimenter le séquenceur par un courant continu de 270 volts.

Par ailleurs, pour optimiser l'encombrement, le moyen de liaison sans contact la partie tournante et la partie fixe peuvent être coaxiaux.

En outre, le moyen de liaison sans contact peut être un joint tournant optique comprenant un organe fixe, lié par une fibre optique au moyen de commande, et un organe tournant lié audit séquenceur, par une fibre optique par exemple.

Un tel joint tournant optique permet notamment de mettre en oeuvre les techniques de multiplexage rendant ainsi le dispositif plus flexible aux évolutions, tout système électrique pouvant être contrôlé par des commandes multiplexées. Au contraire, on rappelle qu'un collecteur à balais et la technique du courant porteur ne permettent pas de faire transiter tout type de signal de commande, du fait du bruit généré par les balais et de la faiblesse d'un courant porteur par exemple.

Selon une variante, le joint tournant optique comporte au moins une lentille monodirectionnelle favorisant le passage d'un ordre de l'organe fixe vers l'organe tournant. Selon une autre variante et en fonction du besoin, le joint tournant optique comporte au moins une lentille bidirectionnelle favorisant le passage d'un signal de l'organe fixe vers l'organe tournant et de l'organe tournant vers l'organe fixe, ce signal pouvant être un ordre ou encore une information provenant d'un capteur par exemple.

Selon une autre version, le moyen de liaison sans contact est un joint tournant par ultrasons. Un tel joint tournant par ultrasons peut comprendre un organe fixe émettant des ultrasons en fonction d'ordres reçus et un organe tournant recevant lesdits ultrasons.

Selon une autre version, le moyen de liaison sans contact comporte une première antenne liée au moyen de commande et une deuxième antenne liée au séquenceur. La première antenne et la deuxième antenne coopèrent l'une avec l'autre, la première antenne étant éventuellement capable d'émettre un signal vers la deuxième antenne et/ou de réceptionner un signal provenant de la deuxième antenne dans le repère fixe par le biais d'un ou plusieurs organes, la deuxième antenne étant éventuellement capable d'émettre un signal vers la première antenne et/ou de réceptionner un signal provenant de la première antenne dans le repère tournant.

Outre un dispositif, l'invention a pour objet un aéronef muni d'un tel dispositif.

Par suite, selon l'invention un aéronef est muni d'un rotor entraîné par un mât rotor mis en rotation par une boîte de transmission de puissance disposée à l'intérieur d'une cellule de l'aéronef, le rotor comprenant au moins un équipement électrique.

L'aéronef étant un aéronef à voilure tournante, ledit rotor peut être un élément de ladite voilure tournante ou encore un rotor anticouple. L'aéronef étant muni d'au moins une hélice, ledit rotor un élément de ladite hélice.

L'aéronef est notamment remarquable en ce qu'il comporte un dispositif d'alimentation électrique et de contrôle d'un équipement du rotor muni d'un générateur d'un courant alternatif triphasé agencé dans la cellule, ce dispositif ayant un transformateur à champ tournant muni d'une partie fixe liée à la cellule et d'une partie tournante solidaire en rotation du rotor, la partie fixe étant reliée au générateur et la partie tournante étant reliée à un séquenceur solidaire en rotation du rotor, le dispositif comportant un moyen de commande disposé dans la cellule qui est lié au séquenceur par un moyen de liaison sans contact, le séquenceur alimentant électriquement l'équipement sur ordre du moyen de commande.

Le générateur de courant alternatif peut être un alternateur conventionnel de l'aéronef utilisé aussi à d'autres fins, le générateur pouvant être entraîné par ladite boîte de transmission de puissance.

De plus, l'aéronef peut comporter une ou plusieurs des caractéristiques du dispositif d'alimentation énoncées précédemment, voire une ou plusieurs des caractéristiques suivantes.

Par exemple, la partie fixe du transformateur comporte un arbre de fixation traversant le mât rotor pour être fixé à la cellule, directement ou via la boîte de transmission de puissance par exemple, la partie tournante et le séquenceur étant solidaires du rotor.

En outre, l'équipement alimenté par le dispositif comprend au moins un moyen apte à lutter contre le givre, tel qu'un moyen d'antigivrage ou un moyen de dégivrage par exemple.

L'invention et ses avantages apparaîtront avec plus de détails dans le cadre de la description qui suit avec un exemple de réalisation donné à titre illustratif en référence aux figures annexées qui représentent :
- la figure 1, un schéma explicitant l'invention,
- la figure 2, une coupe schématique d'un aéronef selon l'invention,
- la figure 3, une coupe du transformateur, et
- la figure 4, le schéma électrique d'une version du convertisseur électrique du transformateur, et
- la figure 5 un schéma d'un transformateur muni de deux organes secondaires et de deux convertisseurs électriques.

Les éléments présents dans plusieurs figures distinctes sont affectés d'une seule et même référence.

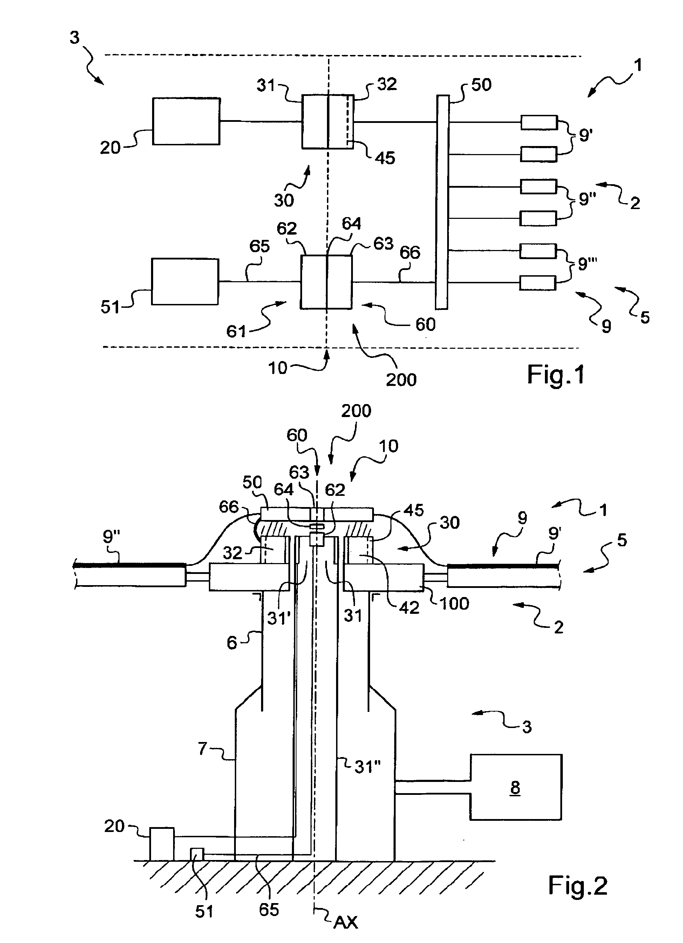

La figure 1 présente un aéronef 1 selon l'invention de manière schématique.

L'aéronef 1 comporte une cellule 3 et un rotor 5, par exemple un rotor anticouple ou un rotor d'une voilure tournante 2 d'un giravion ou encore une hélice d'un appareil.

Un repère fixe est associé à la cellule 3, alors qu'à l'inverse un repère tournant est associé au rotor 5, le repère tournant effectuant une rotation autour de l'axe de rotation du rotor 5 par rapport au repère fixe.

Les éléments fixés à la cellule 3 sont alors dits « fixes », alors qu'au contraire les éléments effectuant une rotation conjointement avec le rotor 5 par rapport à la cellule 3 sont dits « tournants ».

L'invention propose un dispositif 10 pour alimenter électriquement et commander un équipement 9 fixé au rotor 5. Le rotor ayant par exemple trois pales, l'équipement 9 peut comprendre des premiers tapis chauffants 9' d'une première pale ainsi que des deuxièmes tapis chauffants 9" d'une deuxième pale et des troisièmes tapis chauffant 9"' d'une troisième pale, ces tapis chauffants étant destinés à dégivrer les pales voire à empêche la formation de givre sur les pales. D'autres dispositifs destinés au dégivrage ou à l'antigivrage peuvent être utilisés.

Le dispositif 10 comprend un générateur de courant 20, générant notamment un courant alternatif triphasé à 115 volts/ 400 Hz. Ce générateur de courant 20 étant disposé dans la cellule 3, le générateur de courant 20 est fixe en ne tournant pas conjointement avec le rotor 5.

Le générateur de courant 20 est lié électriquement à un transformateur 30 à champ tournant permettant de passer d'un repère fixe à un repère tournant.

En effet, le transformateur comporte une partie fixe 31 liée à la cellule 3 et une partie tournante 32 solidaire en rotation du rotor 5.

On note que la partie tournante 32 peut comporter un convertisseur électrique 45, de type redresseur PD3, pour transformer le courant alternatif provenant du générateur de courant 20 en courant continu.

La partie tournante est alors reliée à un séquenceur 50. Le séquenceur alimente l'équipement électrique 9, par exemple selon une séquence prédéterminée. En effet, lorsque l'équipement 9 comprend une pluralité de tapis chauffants 9', 9", 9"', le séquenceur peut alimenter lesdits tapis chauffants selon un ordre et une fréquence préétablis par exemple, ou encore en fonction d'informations telles que des informations lui parvenant de capteurs de température voire de givre.

On comprend que le séquenceur peut être un équipement électronique particulièrement simple, ou encore peut comporter un processeur ou équivalent pour alimenter et commander l'équipement 9.

Par ailleurs, le dispositif 10 est muni d'un moyen de commande 51 pour ordonner au séquenceur de transférer un courant électrique vers un équipement 9.

Ce moyen de commande 51 est disposé dans le repère fixe en étant solidaire de la cellule 3 et non pas du rotor 5. Le moyen de commande 51 peut être un interrupteur électrique requérant la marche ou l'arrêt de l'équipement 9.

Par suite, le moyen de commande doit transmettre un ordre au séquenceur 50.

Dès lors, le dispositif 10 possède un moyen de liaison sans contact 200 permettant de faire passer ledit ordre d'un repère fixe lié à la cellule à un repère tournant lié au rotor sans dégradation de l'information transmise, voire aussi un signal du repère tournant vers le repère fixe.

A l'instar du transformateur, le moyen de liaison sans contact comprend un organe fixe 62 lié à la cellule 3 qui communique avec le moyen de commande 51, et un organe tournant 63 solidaire en rotation du rotor 5 qui communique avec le séquenceur 50.

Selon une réalisation préférée, le moyen de liaison sans contact 200 est joint tournant optique 60, l'organe fixe 62 communiquant avec le moyen de commande 51 par une fibre optique alors que l'organe tournant 63 communique par exemple par une autre fibre optique avec le séquenceur.

Le joint tournant optique 60 peut aussi comporter au moins une lentille 64 entre l'organe fixe 62 et l'organe tournant 63.

Selon une variante, la lentille est une lentille monodirectionnelle favorisant le transfert d'informations de l'organe fixe 62 vers l'organe tournant 63. Selon une autre variante, la lentille est une lentille bidirectionnelle favorisant le transfert d'informations de l'organe fixe 62 vers l'organe tournant 63, mais aussi de l'organe tournant 63 vers l'organe fixe 62.

Selon une autre version, le moyen de liaison sans contact 200 est un joint tournant par ultrasons. Le moyen de commande communique par exemple par ondes radioélectriques avec l'organe fixe 62, cet organe fixe communiquant avec l'organe tournant 63 par ondes radioélectriques, l'organe tournant 63 communiquant enfin avec le séquenceur par ondes radioélectriques.

Selon une autre version, l'organe fixe 62 est une première antenne d'émission et/ou de réception, l'organe tournant étant une deuxième antenne de réception et/ou d'émission qui communique avec la première antenne par de hautes fréquences.

La figure 2 présente une coupe d'un aéronef 1 montrant une variante d'agencement du dispositif 10.

L'aéronef 1 comporte une installation motrice 8 entraînant une boîte de transmission de puissance 7 et finalement un mât 6 dénommé classiquement « mât rotor ». Les engrenages de la boîte de transmission de puissance ne sont pas représentés pour ne pas alourdir inutilement la figure 2.

Le mât 6 est alors solidaire d'un moyeu 100 du rotor 5, le rotor principal de sustentation d'un hélicoptère par exemple, le moyeu entraînant une pluralité de pales 8.

De plus, le rotor comporte alors au moins un équipement 9, comprenant par exemple des moyens de lutte contre le givre 9', 9" de type moyen d'antigivrage ou de dégivrage. Ces moyens de lutte contre le givre peuvent être actifs en prenant en considération des paramètres de régulation ou encore passifs.

Sous l'impulsion de l'installation motrice et via la boîte de transmission de puissance 7, le mât 6 entraîne les éléments solidaires du rotor 5 en rotation autour d'un axe de rotation AX.

L'aéronef comporte alors un dispositif 10 pour alimenter électriquement voire pour contrôler l'équipement 9.

Le générateur de courant 20 électrique et le moyen de commande 51 sont agencés au sein de la cellule 3. Dès lors, le dispositif 10 comprend un transformateur 30 électrique et un moyen de liaison sans contact 200 pour respectivement relier le générateur de courant 20 électrique et le moyen de commande 51 à un séquenceur 50.

Le transformateur 30 électrique comprend une partie fixe 31 liée à la cellule 3. Par exemple, la partie fixe comprend une portion active 31' pour transmettre le courant électrique en tant que tel, et un arbre de fixation 31" solidarisant ladite portion à la cellule 2.

L'arbre de fixation traverse le mât 6 afin d'être solidarisé à la cellule 3, directement conformément à la figure 2 ou indirectement via la boîte de transmission de puissance 7 par exemple.

De même, l'arbre de fixation 31" traverse le moyeu afin que la portion active 31' dédiée au transfert de courant soit en surplomb du moyeu 100.

Le transformateur 30 électrique comprend de plus une partie tournante 32 surplombant le moyeu, cette partie tournante étant cependant fixée au moyeu 100 afin d'effectuer un mouvement rotatif autour de l'axe de rotation AX conjointement avec le rotor 5. La partie tournante 32 entoure alors la partie fixe 31, et plus particulièrement la portion active 31' de la partie fixe constituant l'organe primaire du transformateur.

La partie tournante est de plus équipée d'un convertisseur électrique 45 de courant électrique communiquant avec un séquenceur 50. Le convertisseur électrique 45 est fixé à la partie tournante 32 du transformateur par des moyens usuels, cette partie tournante remplissant alors le rôle d'organe secondaire du transformateur 30 et de convertisseur électrique.

Le séquenceur 50 est alors relié à l'équipement 9, aux moyens de lutte contre le givre 9', 9" de cet équipement 9 par exemple.

Par ailleurs, le moyen de liaison sans contact est un joint tournant 60 comprenant un organe fixe 62 solidarisé à la cellule 3, l'organe fixe 62 étant en regard d'un organe tournant 63 du joint tournant 60, par exemple fixé au centre du séquenceur 50 de manière à être solidaire en rotation du rotor 5 autour de l'axe de rotation AX.

Selon une version, le joint tournant est un joint tournant optique. Un ensemble d'au moins une lentille 64, monodirectionnelle ou bidirectionnelle peut alors être agencée entre l'organe fixe 62 et l'organe tournant 63.

Indépendamment de la réalisation, le joint tournant 60, la partie tournante 32 et ladite partie fixe 31 du transformateur électrique sont coaxiaux.

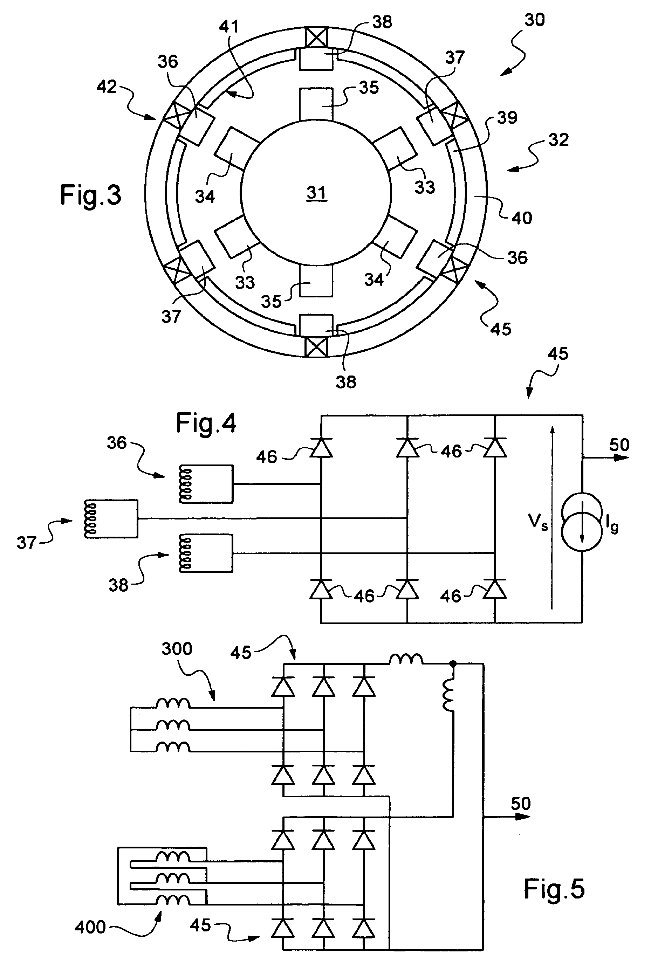

La figure 3 présente une coupe schématique d'un transformateur 30 électrique selon l'invention.

La partie fixe 31 représente l'organe primaire du transformateur 30. Dès lors, la partie fixe comporte trois enroulements primaires 33, 34, 35 déphasés géométriquement d'un angle de cent vingt degrés.

Les trois enroulements primaires 33, 34, 35 sont connectés respectivement par trois conducteurs électriques au générateur de courant 20 électrique qui fournit une alimentation triphasée classique.

Les trois enroulements primaires créent alors un champ magnétique tournant qui coopère avec l'organe secondaire du transformateur à savoir la partie tournante 32.

L'organe secondaire est balayé par le champ tournant selon une fréquence de rotation égale à la fréquence des phases à laquelle on ajoute la fréquence de rotation du rotor à condition de relier de façon adéquate les différents enroulements. Le champ tournant effectue alors avantageusement une rotation dans le sens inverse du rotor 5 pour maximiser sa fréquence de rotation. Par exemple, si la fréquence de pulsation des phases est de 115 Hz et si le rotor tourne selon une fréquence de 5Hz, le champ magnétique passant au travers des spires de l'organe secondaire correspond à une fréquence de 120 Hz.

On note que le rotor peut avoir de légères variations de vitesses. La conversion du courant alternatif en un courant continu permet d'éviter la transmission d'une fréquence variable vers le séquenceur, une telle fréquence variable pouvant endommager le séquenceur et les divers circuits électriques concernés.

En outre, l'organe secondaire comprend au moins un ensemble de trois enroulements secondaires 36, 37, 38 triphasés agencés sur une périphérie interne 41 de la partie tournante en regard de la partie fixe 31, un entrefer séparant les enroulements secondaires 36, 37, 38 des enroulements primaires 33, 34, 35. La périphérie interne peut aussi comporter un circuit magnétique 39.

Par ailleurs, la partie tournante 32 comprend un convertisseur électrique de type redresseur PD3 débouchant sur la périphérie externe 42 de la partie tournante pour être accessible, afin de faciliter une éventuelle action de maintenance. Le redresseur peut aussi être doublé par mesure de sécurité, d'où une redondance intéressante.

La figure 4 présente un schéma électrique montrant un tel convertisseur électrique 45 de type redresseur PD3.

Les bornes de chaque enroulement secondaire 36, 37, 38 sont reliées au convertisseur électrique 45 de type redresseur PD3, ce convertisseur électrique 45 comportant classiquement des diodes ou des thyristors 46.

Enfin, le convertisseur électrique 45 est relié par un conducteur électrique au séquenceur 50.

II est à noter que l'on peut prévoir deux ensembles de trois enroulements secondaires par mesure de sécurité. Selon l'option de la figure 5, un premier ensemble d'enroulement 300 est alors relié en étoile et le deuxième ensemble d'enroulement 400 est relié en triangle afin d'optimiser la transformation en courant continu, chaque ensemble d'enroulement coopérant avec un convertisseur électrique 45.

Naturellement, la présente invention est sujette à de nombreuses variations quant à sa mise en oeuvre. Bien que plusieurs réalisations aient été décrites, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif (10) d'alimentation électrique et de contrôle d'un équipement (9) d'un rotor (5) muni d'un générateur (20) d'un courant alternatif triphasé agencé dans un repère fixe,
**caractérisé en ce qu'**il comporte un transformateur (30) à champ tournant muni d'une partie fixe (31) reliée électriquement audit générateur (20) et d'une partie tournante (32) reliée électriquement à un séquenceur (50) qui est agencé dans un repère tournant, ledit dispositif (10) comportant un moyen de commande (51) du séquenceur (50) disposé dans ledit repère fixe, ce moyen de commande (51) étant relié au séquenceur (50) par moyen de liaison sans contact (200), ledit séquenceur (50) étant apte à alimenter électriquement ledit équipement (9) sur ordre dudit moyen de commande (51).

2. Dispositif selon la revendication 1,
**caractérisé en ce que** ladite partie fixe (31) est entourée par ladite partie tournante (32).

3. Dispositif selon l'une quelconque des revendications 1 à 2,
**caractérisé en ce que** ladite partie fixe (31) comporte trois enroulements primaires (33, 34, 35) triphasés, ladite partie tournante (32) comportant au moins trois enroulements secondaires (36, 37, 38) triphasés.

4. Dispositif selon l'une quelconque des revendications 1 à 3,
**caractérisé en ce que** ladite partie tournante (32) comporte au moins un convertisseur électrique de type redresseur PD3 (45) pour délivrer un courant électrique continu audit séquenceur (50).

5. Dispositif selon la revendication 4,
**caractérisé en ce que** ladite partie tournante (32) comportant une périphérie interne (41) en regard de la partie fixe (31) et une périphérie externe (42), ledit convertisseur électrique (45) débouche sur ladite périphérie externe (42).

6. Dispositif selon l'une quelconque des revendications 1 à 5,
**caractérisé en ce que** ledit moyen de liaison sans contact (200), ladite partie tournante (32) et ladite partie fixe (31) sont coaxiaux.

7. Dispositif selon l'une quelconque des revendications 1 à 6,
**caractérisé en ce que** ledit moyen de liaison sans contact (200) est un joint tournant optique (61) comprenant un organe fixe (62) lié par une fibre optique (65) audit moyen de commande (51) et un organe tournant (63) lié audit séquenceur (50).

8. Dispositif selon la revendication 7,
**caractérisé en ce que** ledit joint tournant optique (61) comporte au moins une lentille (64) monodirectionnelle favorisant le passage d'un ordre dudit organe fixe (62) vers ledit organe tournant (63).

9. Dispositif selon la revendication 7,
**caractérisé en ce que** ledit joint tournant optique (61) comporte au moins une lentille (64) bidirectionnelle favorisant le passage d'un signal dudit organe fixe (62) vers ledit organe tournant (63) et dudit organe tournant (63) vers ledit organe fixe (62).

10. Dispositif selon l'une quelconque des revendications 1 à 6,
**caractérisé en ce que** ledit moyen de liaison sans contact (200) est un joint tournant par ultrasons.

11. Dispositif selon l'une quelconque des revendications 1 à 6,
**caractérisé en ce que** ledit moyen de liaison sans contact (200) comporte une première antenne liée au moyen de commande (51) et une deuxième antenne liée au séquenceur.

12. Aéronef (1) muni d'un rotor (5) entraîné par un mât (6) rotor mis en rotation par une boîte de transmission de puissance (7) disposée à l'intérieur d'une cellule (3) de l'aéronef (1), ledit rotor (5) comprenant au moins un équipement (9) électrique,
**caractérisé en ce qu'**il comporte un dispositif (10) d'alimentation électrique et de contrôle d'un équipement (9) dudit rotor (5) selon l'une quelconque des revendications 1 à 11, et dont le générateur (20) d'un courant alternatif triphasé est agencé dans ladite cellule (3), le transformateur (30) à champ tournant muni d'une partie fixe (31) est liée à ladite cellule (3) et la partie tournante (32) est solidaire en rotation dudit rotor (5), la partie fixe (31) est reliée audit générateur (20) et la partie tournante (32) reliée à un séquenceur (50) est solidaire en rotation dudit rotor (5), et dont le moyen de commande (51) est disposé dans la cellule (3).

13. Aéronef selon la revendication 12,
**caractérisé en ce que** ladite partie fixe (31) comporte un arbre de fixation (31 ") traversant ledit mât (6) pour être fixé à ladite cellule (3), ladite partie tournante (32) et ledit séquenceur (50) étant solidaires dudit rotor (5).

14. Aéronef selon la revendication 12,
**caractérisé en ce que** ledit équipement (9) comprend au moins un moyen apte à lutter contre le givre.

## Claims

1. Electrical power supply and control device (10) for equipment (9) of a rotor (5), the device having a three-phase AC generator (20) arranged in a stationary frame of reference,
**characterised in that** the device includes a rotary field transformer (30) having a stationary portion (31) electrically connected to said generator (20) and a rotary portion (32) electrically connected to a sequencer (50) that is arranged in a rotary frame of reference, said device (10) including control means (51) for controlling the sequencer (50), located in said stationary frame of reference, the control means (51) being connected to the sequencer (50) by contactless connection means (200), said sequencer (50) being suitable for electrically powering said equipment (9) on order of said control means (51).

2. Device according to Claim 1,
**characterised in that** said stationary portion (31) is surrounded by said rotary portion (32).

3. Device according to any one of Claims 1 to 2,
**characterised in that** said stationary portion (31) has three three-phase primary windings (33, 34, 35), and said rotary portion (32) has at least three three-phase secondary windings (36, 37, 38).

4. Device according to any one of Claims 1 to 3,
**characterised in that** said rotary portion (32) includes at least one electrical converter of the PD3 rectifier type (45) to deliver DC to said sequencer (50).

5. Device according to Claim 4,
**characterised in that** said rotary portion (32) has an inner periphery (41) facing the stationary portion (31) and an outer periphery (42), said electrical converter (45) leading to said outer periphery (42).

6. Device according to any one of Claims 1 to 5,
**characterised in that** said contactless connection means (200), said rotary portion (32), and said stationary portion (31) lie on a common axis.

7. Device according to any one of Claims 1 to 6,
**characterised in that** said contactless connection means (200) are an optical rotary joint (61) comprising a stationary member (62) connected by an optical fibre (65) to said control means (51), and a rotary member (63) connected to said sequencer (50).

8. Device according to Claim 7,
**characterised in that** said optical rotary joint (61) includes at least one unidirectional lens (64) facilitating the passage of an order from said stationary member (62) to said rotary member (63).

9. Device according to Claim 7,
**characterised in that** said optical rotary joint (61) includes at least one bidirectional lens (64) facilitating the passage of a signal from said stationary member (62) to said rotary member (63), and from said rotary member (63) to said stationary member (62).

10. Device according to any one of Claims 1 to 6,
**characterised in that** said contactless connection means (200) are a rotary joint using ultrasound.

11. Device according to any one of Claims 1 to 6,
**characterised in that** said contactless connection means (200) comprise a first antenna connected to the control means (51) and a second antenna connected to the sequencer.

12. Aircraft (1) provided with a rotor (5) driven by a rotor mast (6) set into rotation by a power gearbox (7) located inside an airframe (3) of the aircraft (1), said rotor (5) including at least one piece of electrical equipment (9),
**characterised in that** the aircraft includes an electrical power supply and control device (10) for equipment (9) of said rotor (5) according to any one of Claims 1 to 11, and of which the three-phase AC generator (20) is arranged in said airframe (3), the rotary field transformer (30) provided with a stationary portion (31) is connected to said airframe (3) and the rotary portion (32) is integral in rotation with said rotor (5), the stationary portion (31) is connected to said generator (20) and the rotary portion (32) is connected to a sequencer (50) integral in rotation with said rotor (5), and of which the control means (51) are arranged in the airframe (3).

13. Aircraft according to Claim 12,
**characterised in that** said stationary portion (31) includes a fastening shaft (31") passing through said mast (6) for fastening to said airframe (3), said rotary portion (32), and said sequencer (50) being secured to said rotor (5).

14. Aircraft according to Claim 12,
**characterised in that** said equipment (9) includes at least one means suitable for combating icing.

## Patentansprüche

1. Vorrichtung (10) zur Stromversorgung und Kontrolle einer Ausrüstung (9) eines Rotors (5) mit einem Dreiphasenwechselstromgenerator (20), der in einem festen Bezugssystem angeordnet ist,
**gekennzeichnet durch** einen Drehfeldtransformator (30) mit einem ortsfesten Teil (31), der elektrisch mit dem Generator (20) verbunden ist und mit einem sich drehenden Teil (32), der elektrisch mit einem Sequenzer (50) verbunden ist, der in einem sich drehenden Bezugssystem angeordnet ist, wobei die Vorrichtung (10) ein Steuermittel (51) des Sequenzers (50) aufweist, der in dem ortsfesten Bezugssystem angeordnet ist, wobei das Steuermittel (51) mit dem Sequenzer (50) über eine kontaktlose Verbindung (200) verbunden ist, wobei der Sequenzer (50) die Ausrüstung (9) auf Befehl des Steuermittels (51) mit Strom versorgen kann.

2. Vorrichtung nach Anspruch 1,
**dadurch gekennzeichnet, dass** der ortsfeste Teil (31) von dem sich drehenden Teil (32) umgeben ist.

3. Vorrichtung nach einem der Ansprüche 1 oder 2,
**dadurch gekennzeichnet, dass** der feststehende Teil (31) drei primäre Dreiphasenwicklungen (33, 34, 35) aufweist, und der sich drehende Teil (32) mindestens drei sekundäre Dreiphasenwicklungen (36, 37, 38) aufweist.

4. Vorrichtung nach einem der Ansprüche 1 bis 3,
**dadurch gekennzeichnet, dass** der sich drehende Teil (32) mindestens einen Stromrichter vom Typ PD3 Gleichrichter (45) aufweist, um den Sequenzer (50) mit Gleichstrom zu speisen.

5. Vorrichtung nach Anspruch 4,
**dadurch gekennzeichnet, dass** der sich drehende Teil (32) einen Innenrand (41) gegenüber dem ortsfesten Teil (31) und einen Außenrand (42) aufweist, wobei der Stromwandler (45) am Außenrand (42) angeordnet ist.

6. Vorrichtung nach einem der Ansprüche 1 bis 5,
**dadurch gekennzeichnet, dass** das kontaktlose Verbindungsmittel (200), der sich drehende Teil (32) und der ortsfeste Teil (31) koaxial zueinander angeordnet sind.

7. Vorrichtung nach einem der Ansprüche 1 bis 6,
**dadurch gekennzeichnet, dass** das kontaktlose Verbindungsmittel (200) eine sich drehende optische Verbindung (61) ist mit einem feststehenden Organ (62), welches über eine optische Faser (65) mit dem Steuermittel (51) verbunden ist, und einem sich drehenden Organ (63), welches mit dem Sequenzer (50) verbunden ist.

8. Vorrichtung nach Anspruch 7,
**dadurch gekennzeichnet, dass** die sich drehende optische Verbindung (61) mindestens eine monodirektionale Linse (64) aufweist, die den Durchgang eines Befehls des feststehenden Organs (62) zu dem sich drehenden Organ (63) bevorzugt.

9. Vorrichtung nach Anspruch 7,
**dadurch gekennzeichnet, dass** die sich drehende optische Verbindung (61) mindestens eine bidirektionale Linse (64) aufweist, die den Durchgang eines Signals des feststehenden Organs (62) zum sich drehenden Organ (63) und des sich drehenden Organs (63) zu dem feststehenden Organ (62) bevorzugt.

10. Vorrichtung nach einem der Ansprüche 1 bis 6,
**dadurch gekennzeichnet, dass** das kontaktlose Verbindungsmittel (200) eine sich drehende Ultraschallverbindung ist.

11. Vorrichtung nach einem der Ansprüche 1 bis 6,
**dadurch gekennzeichnet, dass** das kontaktlose Verbindungsmittel (200) eine erste Antenne aufweist, die mit dem Steuermittel (51) verbunden ist und eine zweite Antenne, die mit dem Sequenzer verbunden ist.

12. Luftfahrzeug (1) mit einem Rotor (5), der über eine Rotorwelle (6) durch ein Leistungsgetriebe (7) angetrieben wird, welches im Inneren einer Kabine (3) des Luftfahrzeugs (1) angeordnet ist, wobei der Rotor (5) mindestens eine elektrische Ausrüstung (9) aufweist,
**gekennzeichnet durch** eine Vorrichtung (10) zur Stromversorgung und Kontrolle einer Ausrüstung (9) des Rotors (5) nach einem der Ansprüche 1 bis 11, deren Dreiphasenwechselstromgenerator (20) in der Kabine (3) angeordnet ist, der Drehfeldtransformator (30) mit einem ortsfesten Teil (31) mit der Kabine (3) verbunden ist, und der sich drehende Teil (32) drehfest mit dem Rotor (5) verbunden ist, wobei der feststehende Teil (31) mit dem Generator (20) verbunden ist, und der sich drehende Teil (32), der mit einem Sequenzer (50) verbunden ist, drehfest mit dem Rotor (5) verbunden ist, und deren Steuermittel (51) in der Kabine (3) angeordnet ist.

13. Luftfahrzeug nach Anspruch 12,
**dadurch gekennzeichnet, dass** der ortsfeste Teil (31) eine Befestigungsachse (31") aufweist, die die Welle (6) durchquert, um an der Kabine (3) befestigt zu werden, wobei der sich drehende Teil (32) und der Sequenzer (50) fest mit dem Rotor (5) verbunden sind.

14. Luftfahrzeug nach Anspruch 12,
**dadurch gekennzeichnet, dass** die Ausrüstung (9) mindestens ein Frostschutzmittel aufweist.
